# DEMANDE DE BREVET EUROPEEN

(11) **EP 2 305 941 A1**
(43) Date de publication de la demande: **06.04.2011**
(21) Numéro de dépôt: 10177525.2
(22) Date de dépôt: 20.09.2010
(51) Int. Cl.: E06B 9/04, E06B 9/06

(54) **Dispositif d'isolation thermique d'embrasure de portes ou de fenêtres**

(30) Priorité: 25.09.2009 FR 0956632
(71) Demandeur: L.F.I. La Foncière Innovation, 75008 Paris (FR)
(72) Inventeur: Henninot, Jacques, 69260 Charbonnière les Bains (FR); Gagnière, Eric, 69370 Saint Didier au Mont d'Or (FR); Charon, Jean-Philippe, 38000 Grenoble (FR); Rampillon, Thierry, 38000 Grenoble (FR)
(74) Mandataire: Chevalier, Renaud Philippe

(57) **Abrégé**

Ce dispositif comporte au moins un organe d'obturation (1) conformé pour s'engager dans une embrasure (2), et équipé de moyens d'isolation thermique, ainsi que des moyens d'articulation (4, 5) conçus pour articuler l'organe d'obturation entre une position ouverte dans laquelle il libère un accès à l'embrasure et une position fermée dans laquelle l'organe d'obturation s'engage en tout ou partie hermétiquement dans l'embrasure.

## Description

La présente invention se rapporte à un dispositif d'isolation thermique d'une embrasure de porte ou de fenêtre.

L'isolation thermique de bâtiments s'inscrit dans une démarche de haute qualité environnementale. En effet, l'isolation thermique permet de réduire la déperdition d'énergie à travers les murs, les fenêtres, le sol ou bien encore la toiture des bâtiments. Il en résulte une diminution de la production d'énergie primaire dédiée aux bâtiments et par là-même une diminution des émissions de gaz à effet de serre, tels que le dioxyde de carbone.

L'isolation thermique de bâtiments, conjuguée à la présence par exemple de capteurs solaires thermiques et/ou de panneaux photovoltaïques, contribue à la réalisation de bâtiments à énergie positive, c'est-à-dire produisant plus d'énergie qu'ils n'en consomment pour leur fonctionnement.

Ainsi, il est connu de l'état de la technique d'utiliser des volets roulants comportant un tablier d'occultation, disposés à l'extérieur de l'embrasure de fenêtre.

Ces volets roulants sont donc soumis aux contraintes météorologiques pouvant conduire à des dégradations du volet, telles que des déformations en cas d'absorption importante de chaleur.

De plus, l'isolation thermique demeure nettement perfectible dans la mesure où les flux de chaleur circulant depuis l'intérieur de l'embrasure et traversant la fenêtre ne peuvent être régulés correctement par le volet en raison de l'espacement entre la fenêtre et le volet, nécessaire au bon fonctionnement de ce dernier, conduisant à une mauvaise herméticité de l'embrasure.

D'autre part, il existe des stores intérieurs occultant la lumière du jour. Ces stores intérieurs conduisent également à une mauvaise herméticité de l'embrasure et à une déperdition d'énergie à travers l'embrasure.

La présente invention a pour objet de remédier en tout ou partie aux inconvénients précités et consiste à cet effet en un dispositif d'isolation thermique d'une embrasure de porte ou de fenêtre comportant :
- au moins un organe d'obturation conformé pour s'engager dans l'embrasure, et équipé de moyens d'isolation thermique ;
- des moyens d'articulation conçus pour articuler l'organe d'obturation entre une position ouverte dans laquelle il libère un accès à l'embrasure et une position fermée dans laquelle l'organe d'obturation s'engage en tout ou partie hermétiquement dans l'embrasure.

Ainsi, l'organe d'obturation en position fermée forme alors un bouchon thermique hermétique permettant de réduire significativement la déperdition d'énergie à travers l'embrasure.

Dans un mode de réalisation préférée, l'organe d'obturation en position fermée s'engage par complémentarité de forme dans l'embrasure.

L'herméticité de l'embrasure est obtenue par la complémentarité de forme de l'organe d'obturation et de l'embrasure, lorsque l'organe d'obturation est en position fermée.

Selon une caractéristique avantageuse, le dispositif selon l'invention comporte en outre des moyens d'entraînement de l'organe d'obturation conçus pour déplacer celui-ci entre la position ouverte et la position fermée.

Selon un mode de réalisation, l'organe d'obturation est réalisé sous la forme d'un caisson délimitant une enceinte renfermant un matériau isolant thermique.

Le matériau isolant thermique, telle que la laine de roche, est dissimulé à l'intérieur de l'enceinte pour des raisons esthétiques.

Avantageusement, l'enceinte renferme en outre un matériau isolant phonique. La laine de roche peut être également utilisée pour ses propriétés d'absorption acoustique.

Avantageusement encore, l'organe d'obturation présente au moins une paroi munie d'une pluralité d'orifices conformée pour filtrer un bruit basse fréquence.

De manière avantageuse, l'organe d'obturation présente au moins une paroi conçue pour réfléchir la lumière blanche solaire provenant de l'embrasure, lorsque l'organe d'obturation est en position ouverte.

Une telle paroi peut être réalisée en matériau possédant des propriétés de réflexion spéculaire ou diffuse. On peut également utiliser un revêtement, surmontant la paroi, possédant des propriétés de réflexion spéculaire ou diffuse.

Ainsi, cette paroi permet d'exploiter une partie du rayonnement solaire par exemple pour le chauffage d'un local présentant une embrasure équipée d'un dispositif conforme à l'invention.

Selon un mode de réalisation, les moyens d'articulation comportent :
- au moins un bras fixé à l'organe d'obturation ;
- un axe sur lequel est monté mobile le bras, l'axe étant destiné à être rattaché à un bâti.

Selon un mode préféré de l'invention, l'axe est réalisé sous la forme d'une tige d'un vérin.

Ainsi, le vérin en coopération avec le bras assure une fonction d'articulation de l'organe d'obturation ainsi qu'une fonction d'entraînement dudit organe d'obturation.

Dans un mode de réalisation, les moyens d'entraînement de l'organe d'obturation comportent au moins un vérin présentant une tige reliée audit organe d'obturation.

Le déplacement de la tige du vérin permet de déplacer l'organe d'obturation entre la position ouverte et la position fermée.

Selon un autre mode de réalisation, les moyens d'entraînement comportent au moins un arbre moteur, fixé à l'organe d'obturation, conçu pour coopérer avec au moins une crémaillère destinée à être reliée à un bâti.

Le déplacement de l'arbre moteur le long de la crémaillère permet de déplacer l'organe d'obturation entre la position ouverte et la position fermée.

Avantageusement, le dispositif selon l'invention comporte en outre des moyens de guidage de l'organe d'obturation de la position ouverte vers la position fermée ou réciproquement.

Les moyens de guidage permettent de réduire l'effort à fournir pour déplacer l'organe d'obturation entre la position ouverte et la position fermée ou réciproquement.

Dans un mode de réalisation, les moyens de guidage présentent au moins deux coulisses s'étendant de part et d'autre de l'embrasure, chacune des coulisses présentant respectivement une première extrémité destinée à être reliée au dormant de l'embrasure et une seconde extrémité destinée à être reliée à un bâti.

Avantageusement, l'organe d'obturation comporte des moyens d'aimantation destinés à coopérer avec des moyens d'aimantation complémentaires, lorsque ledit organe d'obturation est en position ouverte.

Les moyens d'aimantation, en coopération avec des moyens d'aimantation complémentaires sont destinés à réduire l'effort à fournir pour maintenir l'organe d'obturation en position ouverte.

La présente invention se rapporte également à un local présentant :
- au moins un mur dans lequel est ménagée au moins une embrasure de porte ou de fenêtre ;
- un dispositif conforme à l'invention conformé de manière à ce que l'organe d'obturation en position fermée soit sensiblement coplanaire à une face du mur.

Ainsi, outre des raisons esthétiques, un tel affleurement résultant de la coplanarité de l'organe d'obturation avec une face du mur permet de réduire l'encombrement dudit organe d'obturation en position fermée.

Dans un mode de réalisation, l'organe d'obturation en position fermée est sensiblement coplanaire à la face interne du mur, ladite face étant orientée vers l'intérieur du local.

Ainsi, on peut disposer une porte ou une fenêtre dans l'embrasure à l'avant de l'organe d'obturation en position fermée. Par « avant », on entend une direction orientée vers l'extérieur du local. Par conséquent, l'organe d'obturation n'est pas soumis à des contraintes météorologiques.

Selon une caractéristique avantageuse, le local selon l'invention présente en outre des moyens de commande des moyens d'entraînement.

Selon une autre caractéristique avantageuse, le local selon l'invention présente des moyens d'aimantation complémentaires conçus pour coopérer avec les moyens d'aimantation lorsque l'organe d'obturation est en position ouverte.

Ainsi, les moyens d'aimantation coopérant avec les moyens d'aimantation complémentaires permettent de réduire l'effort à fournir pour maintenir l'organe d'obturation en position ouverte.

D'autres caractéristiques et avantages de la présente invention apparaîtront à la lecture de la description détaillée ci-après de plusieurs modes de réalisation non limitatifs, en faisant référence aux dessins annexés sur lesquels :
- les figures 1 à 4 sont des vues en perspective d'un dispositif selon l'invention équipant une embrasure de fenêtre, et présentant le passage d'un organe d'obturation de la position ouverte à la position fermée ;
- les figures 5 et 6 sont des vues en perspective schématique du dispositif illustré aux figures 1 à 4, représentant des moyens d'entraînement de l'organe d'obturation, la figure 6 présentant en outre une variante de réalisation des moyens de guidage de l'organe d'obturation ;
- la figure 7 est une vue en perspective du dispositif illustré aux figures 1 à 4, présentant une variante de réalisation des moyens d'articulation de l'organe d'obturation ;
- les figures 8 à 10 sont des vues en perspective schématique d'un dispositif selon l'invention présentant trois variantes de réalisation des moyens d'entraînement de l'organe d'obturation ;
- la figure 11 est une vue en perspective schématique d'un dispositif selon l'invention comportant un organe d'obturation présentant deux parties articulées entre elles.

Pour les différentes variantes de réalisation, les mêmes références pourront être utilisées pour des éléments identiques ou assurant la même fonction, par souci de simplification de la description.

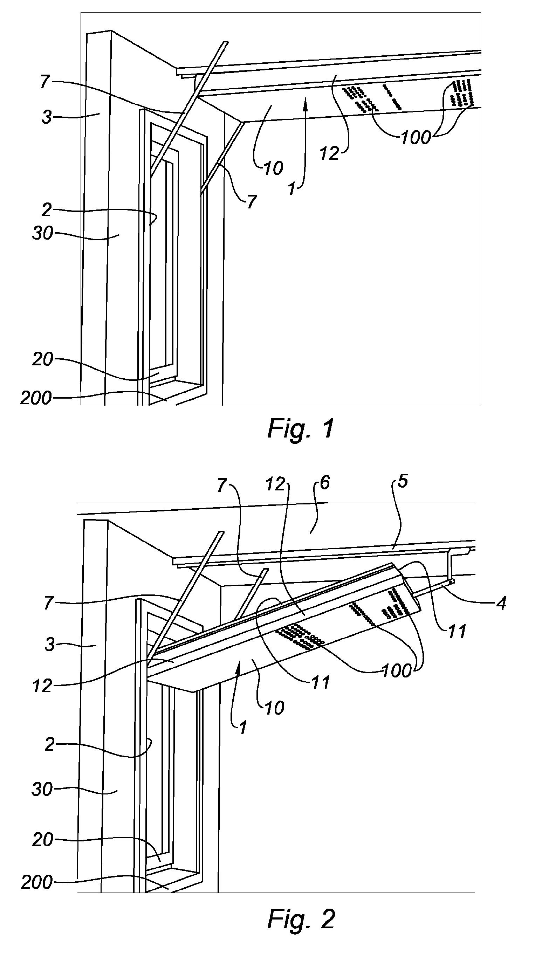

Le dispositif illustré aux figures 1 à 4 comporte un caisson 1 de forme sensiblement parallélépipédique destiné à équiper une embrasure 2 d'une fenêtre 20, ménagée dans un mur 3 d'un local. Le caisson 1 présente une paroi interne 10 et une paroi externe 11 destinées respectivement à être orientées vers l'intérieur et l'extérieur du local lorsque le caisson 1 équipe l'embrasure 2. En outre, le caisson 1 présente deux parois longitudinales 12 reliées entre elles par deux parois latérales 13. Par « longitudinal », on entend une direction s'étendant sensiblement suivant la longueur du caisson 1.

Par ailleurs, le caisson 1 délimite une enceinte renfermant un matériau isolant thermique, telle que la laine de roche.

La paroi interne 10 du caisson 1 est pourvue d'une pluralité d'orifices 100 formant des moyens de filtrage d'un bruit basse fréquence. La laine de roche renfermée dans l'enceinte du caisson 1 permet également d'obtenir une bonne isolation phonique.

De plus, la paroi interne 10 est réalisée avec un matériau possédant des propriétés de réflexion spéculaire ou diffuse. Selon une variante d'exécution, il est également possible d'utiliser un revêtement, surmontant la paroi interne 10, possédant des propriétés de réflexion spéculaire ou diffuse.

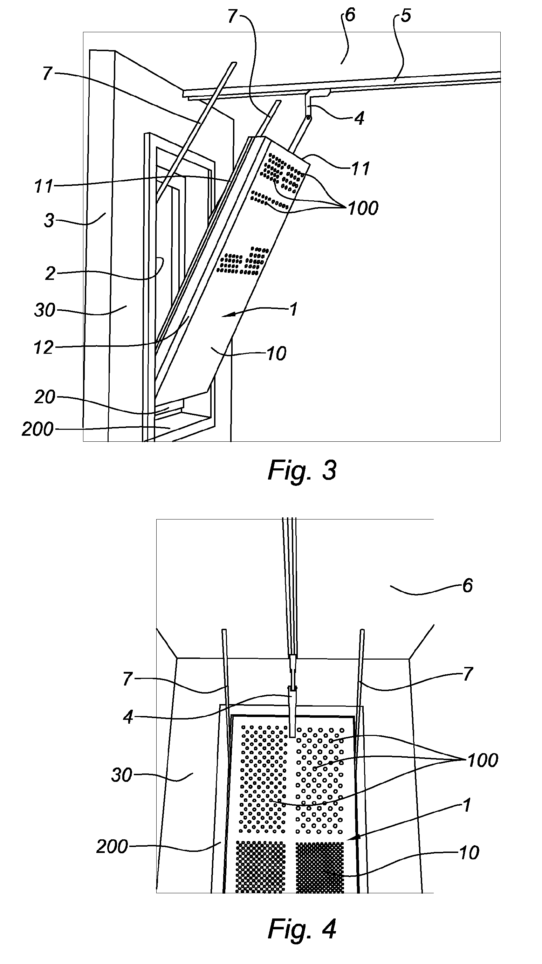

Le caisson 1 est monté articulé entre une position ouverte, illustré à la figure 1, dans laquelle il libère un accès à l'embrasure 2 et une position fermée, illustrée à la figure 4, dans laquelle il s'engage par complémentarité de forme dans l'embrasure 2. En position fermée, le caisson 1 est sensiblement coplanaire à la face interne 30 du mur 3, orientée vers l'intérieur du local. En position ouverte, le caisson 1 s'étend dans un plan sensiblement perpendiculaire à la face interne 30 du mur 3. Ainsi, en position ouverte, la paroi interne 10 du caisson 1 réfléchit de manière optimale la lumière blanche solaire provenant de l'embrasure 2 vers l'intérieur du local.

L'articulation du caisson 1 est assurée par un bras 4 monté mobile sur un axe 5. Le bras 4 est monté sur une paroi latérale 11 du caisson 1 tandis que l'axe 5 est monté fixe à un plafond 6 du local.

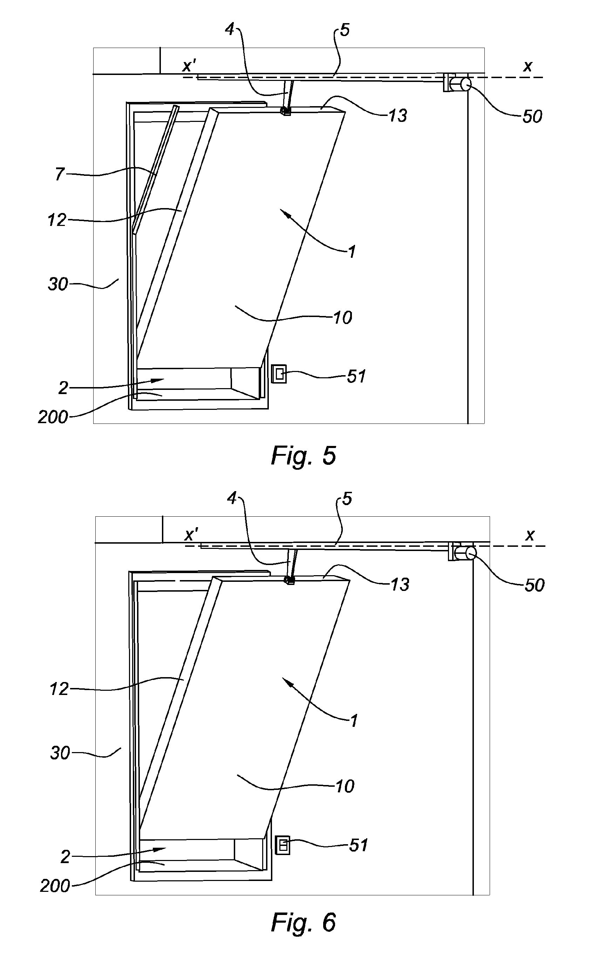

Le dispositif comporte également des moyens d'entraînement du caisson 1, illustrés aux figures 5 et 6, conçus pour déplacer celui-ci entre la position ouverte et la position fermée. Ces moyens d'entraînement ne sont pas visibles aux figures 1 à 4 car ceux-ci sont dissimulés à l'intérieur de l'axe 5.

A cet égard, l'axe 5 est formé par une tige de vérin à vis. La tige de vérin comporte une vis hélicoïdale conformée pour coopérer avec un pignon fixé au bras 4. La tige de vérin est reliée à un motoréducteur 50. Celui-ci est commandé électriquement par un interrupteur 51 ménagé sur la face interne 30 du mur 3.

Le dispositif comporte par ailleurs deux coulisses 7 s'étendant de part et d'autre de l'embrasure 2, chacune des coulisses 7 présentant une première extrémité reliée au dormant 200 de l'embrasure 2 et une seconde extrémité reliée au plafond 6. De plus, chacune des coulisses 7 comporte une première portion verticale ménagée dans le dormant 200, et une seconde portion inclinée, en saillie du dormant 200. Les coulisses 7 forment des moyens de guidage du caisson 1 de la position ouverte vers la position fermée ou réciproquement.

Chacune des coulisses 7 est en outre conçue pour coopérer avec un galet monté sur une partie supérieure des parois longitudinales 12 du caisson 1. Par « supérieure », on entend une direction sensiblement orientée vers le plafond 6 lorsque le caisson 1 est en position fermée.

Lorsque le caisson 1 est en position ouverte, un utilisateur souhaitant disposer le caisson 1 en position fermée appuie sur l'interrupteur 51. Cela a pour effet la mise en fonctionnement du motoréducteur 50 qui entraîne alors en rotation la tige de vérin. Il en résulte un entraînement en translation suivant l'axe X'-X du bras 4. Les galets montés sur la partie supérieure des parois longitudinales 12 du caisson 1 assurent alors le déplacement de celui-ci le long des coulisses 7. Lorsque le caisson 1 est en cours de fermeture, ce qui est illustré aux figures 2 et 3, les coulisses 7 assurent un guidage du caisson 1 vers la position fermée illustrée à la figure 4.

De la même façon, lorsque le caisson 1 est en position fermée, un utilisateur souhaitant disposer le caisson 1 en position ouverte appuie sur l'interrupteur 51 afin que le caisson 1 effectue le trajet précité dans le sens opposé.

Dans une variante de réalisation illustrée à la figure 6, le dispositif selon l'invention diffère en ce que les coulisses 7 sont ménagées entièrement à la verticale dans le dormant 200 de l'embrasure 2, et ne sont donc pas visibles.

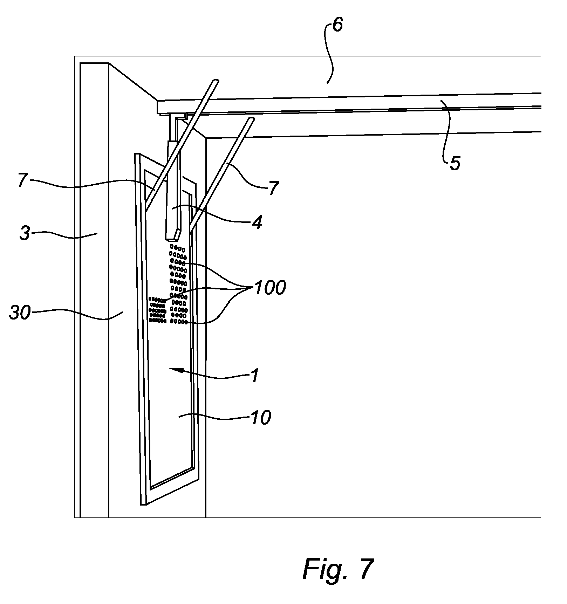

Selon une variante de réalisation illustrée à la figure 7, le dispositif selon l'invention diffère en ce que le bras 4 est monté sur la paroi interne 10 du caisson 1, et s'étend longitudinalement sur une partie de celle-ci.

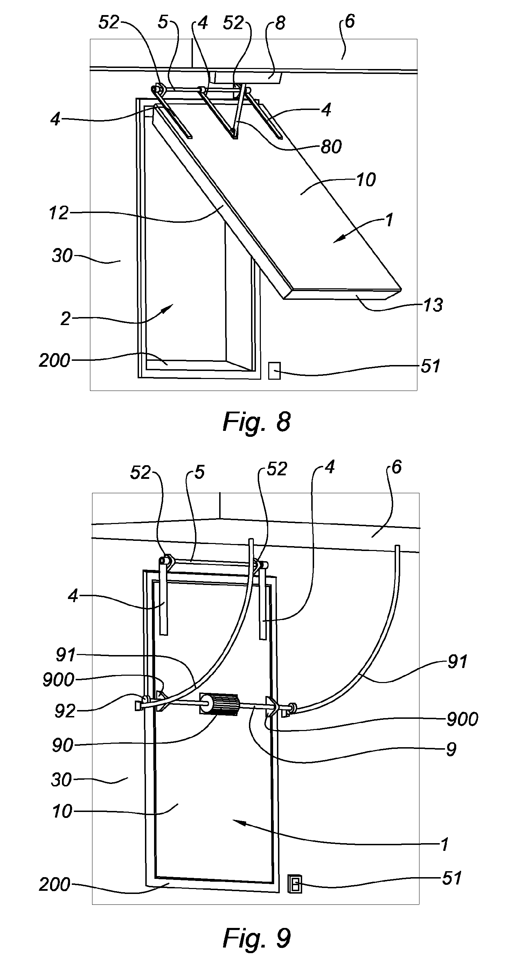

Selon une variante de réalisation illustrée à la figure 8, le dispositif selon l'invention diffère en ce que les moyens d'entraînement comportent un vérin rotatif 8 à chaîne monté fixe au plafond 6, commandé par l'interrupteur 51. Le vérin rotatif présente une tige 80 montée fixe sur la paroi interne 10 du caisson 1. De plus, la tige 80 est munie d'un pignon entraîné en rotation par une chaîne, elle-même entraînée par deux pistons. Le pignon, la chaîne ainsi que les pistons ne sont pas représentés à la figure 8.

Par ailleurs, le caisson 1 est animé d'un pur mouvement de rotation autour de l'axe 5 à l'aide de trois bras 4 fixés sur la paroi interne 10 du caisson 1. L'axe 5 est fixé à la face interne 30 du mur 3 au moyen de deux paliers 52 d'articulations. Un tel mouvement de rotation permet de simplifier notablement l'articulation du caisson 1 entre la position ouverte et la position fermée.

Ainsi, lorsqu'un utilisateur appuie sur l'interrupteur 51, le vérin 8 permet de déplacer la tige 80 et par là-même le caisson 1 entre la position ouverte et la position fermée.

Selon une variante d'exécution non représentée, le vérin rotatif 8 est à double crémaillère. Le pignon est alors entraîné en rotation par deux crémaillères, chacune d'elle étant entraînée par un piston.

Selon une autre variante de réalisation illustrée à la figure 9, le dispositif selon l'invention diffère en ce que les moyens d'entraînement comportent un arbre moteur 9 fixé à la paroi interne 10 du caisson 1 aux moyens d'attaches 900. L'arbre moteur 9 présente à chacune de ses extrémités un pignon 92 coopérant avec une crémaillère 91. Les deux crémaillères 91 présentent une première extrémité fixée à la face interne 30 du mur 3 et une seconde extrémité fixée au plafond 6 du local.

L'arbre moteur 9 est entraîné en rotation par un moteur électrique 90 commandé par l'interrupteur 51. Ainsi, lorsqu'un utilisateur appuie sur l'interrupteur 51, le caisson 1 se déplace le long des crémaillères 91 entre la position ouverte et la position fermée.

Par « crémaillère », on entend tout organe denté conformé pour coopérer avec le pignon 92, l'organe denté pouvant présenter une partie curviligne, ou encore l'organe denté pouvant être réalisé dans un matériau souple pour l'obtention d'une courroie dentée.

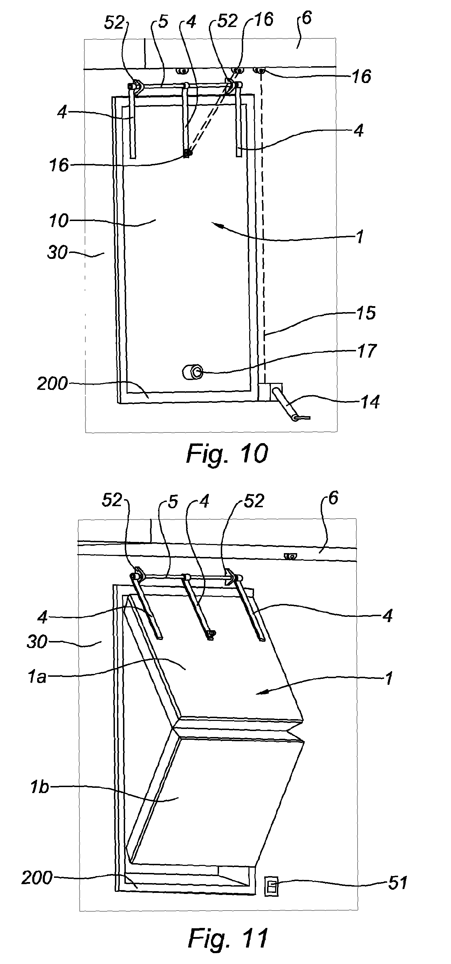

Selon une autre variante de réalisation illustrée à la figure 10, le dispositif selon l'invention diffère en ce que les moyens d'entraînement comportent des poulies d'entraînement 16 recevant un câble 15 commandé mécaniquement par un treuil 14.

Par ailleurs, le caisson 1 est animé d'un pur mouvement de rotation autour de l'axe 5 à l'aide de trois bras 4 fixés sur la paroi interne 10 du caisson 1. L'axe 5 est fixé à la face interne 30 du mur 3 au moyen de deux paliers 52 d'articulations. Un tel mouvement de rotation permet de simplifier notablement l'articulation du caisson 1 entre la position ouverte et la position fermée.

En outre, la face interne 10 du caisson 1 est équipée d'une ventouse 17 aimantée destinée à coopérer avec des moyens d'aimantation complémentaires fixés au plafond 6, non représentés.

Lorsque le caisson 1 est en position ouverte, la ventouse 7 aimantée coopérant avec les moyens d'aimantation complémentaires permet de réduire l'effort à fournir par les moyens d'entraînement pour maintenir le caisson 1 en position ouverte. Le déplacement du caisson 1 entre la position ouverte et la position fermée est réalisé par un utilisateur actionnant le treuil 14.

Selon une variante de réalisation illustrée à la figure 11, le dispositif selon l'invention diffère en ce que le caisson 1 est scindé en deux parties 1a, 1 b articulées entre elles. De cette façon, le passage du caisson 1 de la position fermée à la position ouverte est réalisé avec un encombrement longitudinal réduit. Il est à noter que les moyens d'entraînement du caisson 1 ne sont pas représentés à la figure 11.

Bien entendu, les modes de réalisation de l'invention décrit ci-dessus ne présentent aucun caractère limitatif. Des détails et améliorations peuvent y être apportés dans d'autres variantes d'exécution sans pour autant sortir du cadre de l'invention.

## Revendications

1. Dispositif d'isolation thermique d'une embrasure (2) de porte ou de fenêtre comportant :
- au moins un organe d'obturation (1) conformé pour s'engager dans l'embrasure, et équipé de moyens d'isolation thermique ;
- des moyens d'articulation (4, 5) conçus pour articuler l'organe d'obturation entre une position ouverte dans laquelle il libère un accès à l'embrasure et une position fermée dans laquelle l'organe d'obturation s'engage en tout ou partie hermétiquement dans l'embrasure.

2. Dispositif selon la revendication 1, dans lequel l'organe d'obturation (1) en position fermée s'engage par complémentarité de forme dans l'embrasure (2).

3. Dispositif selon la revendication 1 ou 2, comportant en outre des moyens d'entraînement (50) de l'organe d'obturation conçus pour déplacer celui-ci entre la position ouverte et la position fermée.

4. Dispositif selon l'une des revendications 1 à 3, dans lequel l'organe d'obturation est réalisé sous la forme d'un caisson (1) délimitant une enceinte renfermant un matériau isolant thermique.

5. Dispositif selon la revendication 4, dans lequel l'enceinte renferme en outre un matériau isolant phonique.

6. Dispositif selon l'une des revendications 1 à 5, dans lequel l'organe d'obturation (1) présente au moins une paroi (10) munie d'une pluralité d'orifices (100) conformée pour filtrer un bruit basse fréquence.

7. Dispositif selon l'une des revendications 1 à 6, dans lequel l'organe d'obturation (1) présente au moins une paroi (10) conçue pour réfléchir la lumière blanche solaire provenant de l'embrasure (2), lorsque l'organe d'obturation est en position ouverte.

8. Dispositif selon l'une des revendications 1 à 7, dans lequel les moyens d'articulation comportent :
- au moins un bras (4) fixé à l'organe d'obturation (1) ;
- un axe (5) sur lequel est monté mobile le bras, l'axe étant destiné à être rattaché à un bâti (6).

9. Dispositif selon la revendication 8, dans lequel l'axe (5) est réalisé sous la forme d'une tige d'un vérin.

10. Dispositif selon la revendication 3, dans lequel les moyens d'entraînement de l'organe d'obturation (1) comportent au moins un vérin (8) présentant une tige (80) reliée audit organe d'obturation.

11. Dispositif selon la revendication 3, dans lequel les moyens d'entraînement comportent au moins un arbre moteur 9, fixé à l'organe d'obturation (1), conçu pour coopérer avec au moins une crémaillère (91) destinée à être reliée à un bâti (6).

12. Dispositif selon l'une des revendications précédentes, comportant en outre des moyens de guidage (7) de l'organe d'obturation de la position ouverte vers la position fermée ou réciproquement.

13. Dispositif selon la revendication 12, dans lequel les moyens de guidage présentent au moins deux coulisses (7) s'étendant de part et d'autre de l'embrasure (2), chacune des coulisses présentant respectivement une première extrémité destinée à être reliée au dormant (200) de l'embrasure (2) et une seconde extrémité destinée à être reliée à un bâti (6).

14. Dispositif selon l'une des revendications 1 à 13, dans lequel l'organe d'obturation (1) comporte des moyens d'aimantation (17) destinés à coopérer avec des moyens d'aimantation complémentaires, lorsque ledit organe d'obturation est en position ouverte.

15. Local présentant :
- au moins un mur (3) dans lequel est ménagée au moins une embrasure (2) de porte ou de fenêtre ;
- un dispositif selon l'une des revendications 1 à 13 conformé de manière à ce que l'organe d'obturation (1) en position fermée soit sensiblement coplanaire au mur.

16. Local selon la revendication 15, dans lequel l'organe d'obturation (1) en position fermée est sensiblement coplanaire à la face interne (30) du mur, ladite face étant orientée vers l'intérieur du local.

17. Local selon la revendication 15 ou 16, présentant un dispositif selon l'une des revendications 3 à 13, et des moyens de commande (51) des moyens d'entraînement.

18. Local selon l'une des revendications 15 à 17, présentant un dispositif selon la revendication 14, et des moyens d'aimantation complémentaires conçus pour coopérer avec les moyens d'aimantation (17) lorsque l'organe d'obturation (1) est en position ouverte.
